# EUROPEAN PATENT SPECIFICATION

(11) **EP 3 921 289 B1**
(45) Date of publication and mention of the grant of the patent: **15.04.2026**
(21) Application number: 20713766.2
(22) Date of filing: 05.02.2020
(51) Int. Cl.: C04B 14/30, C04B 28/02

(54) **A METHOD OF OBTAINING PHOTOACTIVE CEMENTS**
VERFAHREN ZUR GEWINNUNG FOTOAKTIVER ZEMENTE
PROCÉDÉ D'OBTENTION DE CIMENTS PHOTO-ACTIFS

(30) Priority: 06.02.2019 PL 42881519
(43) Date of publication of application: 15.12.2021
(73) Proprietor: Zachodniopomorski Uniwersytet Technologiczny w Szczecinie, 70-310 Szczecin (PL)
(72) Inventor: JANUS, Magdalena, 72-001 Kurów (PL)
(86) International application number: PCT/PL2020/050016
(87) International publication number: WO 2020/162774

(56) References cited:
- DE-A1- 102010 060 127
- JP-A- H10 291 849
- LLANES MANUEL CONTRERAS ET AL: "Recovery of ilmenite mud as an additive in commercial Portland cements", ENVIRONMENTAL SCIENCE AND POLLUTION RESEARCH, SPRINGER BERLIN HEIDELBERG, BERLIN/HEIDELBERG, vol. 25, no. 25, 19 June 2018 (2018-06-19), pages 24695 - 24703, XP036579015, ISSN: 0944-1344, [retrieved on 20180619], DOI: 10.1007/S11356-018-2498-9

## Description

The present invention relates to a method of obtaining photoactive cements containing titanium dioxide.

Photoactive cements are used worldwide to obtain plasters, concretes and other building materials. Such materials have self-cleaning properties and are involved in the purification of air from such compounds as nitrogen oxides and volatile organic compounds.

Photoactive cements are obtained by adding photocatalysts to cements. One way is to add a titanium dioxide aerogel to Portland cement. The material obtained in this way showed better water resistance, low shrinkage and long life-time [Y. Zhuoshu, L. Jianbo, L. Guoqiang, K. Qinglin, F. Qiang, Z. Lei, C. Geng, C. Junchao, Titanium dioxide and iron oxide aerogen foam cement, CN105645873*].* One of the ways to obtain photoactive cements is also the use of kaolinite/TiO₂ addition [K. Mamulová Kutláková, J. Tokarsky', P. Kovár ̌, S. Vojte ̌sková, A. Kovárová, B. Smetanac, J. Kukutschová, P. Capková, V. Matejka, Preparation and characterization of photoactive composite kaolinite/TiO2, Journal of Hazardous Materials, 188 (2011) 212-220*; V. Matějka, P. Matějková, P. Kovář, J. Vlček, J. Přikryl, P. Červenka, Z. Lacný, J. Kukutschová, Metakaolinite*/*TiO₂ composite: Photoactive admixture for building materials based on Portland cement binder, Construction and Building Materials, 35 (2012) 38-44*]*.* From the patent specification PL230533 is known a method of obtaining cement mortars consisting in adding titanium compounds to the mortar, which is characterized by the fact that during preparation of the cement mortar, titanium dioxide modified with carbon and nitrogen is added to it, in an amount of 1 to 5 mass% relative to cement weight. The modification of titanium dioxide with carbon and nitrogen occur by heating titanium dioxide in ammonia and isopropanol vapours at a temperature of 600 ° C during 1 hour, while ammonia gas is passed at a rate of 200 ml/minute.

From polish patent application PL406503 a method of obtaining self-cleaning cement mortars containing titanium dioxide is known, during the cement mortar preparation, titanium dioxide with anatase structure, modified with carbon and nitrogen, is added to it in an amount of 1 to 10 mass% in relation to the mass of cement. Modification of titanium dioxide by carbon and nitrogen occur by heating titanium dioxide in an ammonia and n-hexane vapours at a temperature of 100°C to 600°C for 1 hour, while ammonia gas is passed through the scrubber with n-hexane at a rate of 200 ml /minute.

Raw materials for the production of Portland cement are found in almost all countries, and cement plants operate around the world. The cement production process consists essentially of grinding raw materials, mixing them in strictly defined proportions and burning in a large rotary kiln at temperatures up to about 1450 ° C, when the material sinters and partly joins into balls called clinker. Clinker is cooled and ground to a fine powder with a little gypsum, and the resulting product is a commercial Portland cement widely used. Mixing and milling of raw materials can take place in water or in a dry state; hence the names "wet" and "dry" processes [Neville AM, Properties of concreto, 5th edition, Pearson Education Limited, Edinburgh Gate, England, 2011]*.* In both processes, after leaving the furnace, the cement clinker is cooled on grate coolers from 800 to 100°C for 30 minutes.

Titanium dioxide occurs in three crystallographic forms, anatase, rutile and brookite. The anatase form is considered the most photoactive form of titanium dioxide. In the world, on an industrial scale, titanium dioxide is produced by two methods, the sulphate and chloride methods. The subsequent stages of titanium dioxide production by the sulphate method include the following processes. When ilmenite is the raw material for production, it is dried and ground in the initial stage, then it is decomposed with sulfuric acid (VI). This step is followed by reduction with iron scrap, followed by clarification and crystallization. After these stages, hydrolysis and filtration are carried out. The TiO₂ suspension is then filtered and washed and after calcination additions calcined for 12 hours. The resulting sinter is ground, then filtered again and surface treated and dried. The resulting material has a rutile crystallographic structure.

JPH10291849 discloses a method of obtaining photoactive cements containing titanium dioxide, characterized in that, during cement production, to cement clinker TiO2, is added, in an amount of 5-200 mass% calculated on a dry weight basis relative to clinker mass. The material added is not pure TiO2 but a by-product from the installation of obtaining titanium white by the sulphate method, taken from the drum filters before adding roasting additives and before calcination.

Surprisingly, it turned out that a by-product from the production of titanium white by the sulphate method added at the right time during cement production can be used to obtain photoactive cements.

A method of obtaining photoactive cements, according to the invention, containing titanium dioxide, is characterized by the fact that during cement production, a by-product from sulphate method of titanium white production is added to the cement clinker during its cooling in the cooler, by-product is taken from the drum filters before adding roasting additives and before calcination, in an amount of 1 to 5 mass% calculated on a dry weight basis relative to clinker mass. The by-product from the installation for obtaining titanium white by the sulphate method is added to cement clinker at a temperature from 600 to 100°C. The clinker modified in this way is then ground and used for cement production.

The material thus obtained exhibits photocatalytic activity when removing nitrogen oxides from the air. Due to the fact that the by-product is added during cooling using the clinker cooling temperature to obtain the crystalline form of titanium dioxide, cement is obtained much cheaper. The method of the invention is illustrated in the examples, the first example being a comparative example.

### Example 1

300g cement clinker was ground in a ball mill. Cement tiles were obtained from the obtained cement after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 4% of NO from air.

### Example 2

300 g of cement clinker was heated up to 600°C and then 7.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 1% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 9% of NO from air.

### Example 3

300 g of cement clinker was heated up to 600°C and then 22.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 3% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 15.2% of NO from air.

### Example 4

300 g of cement clinker was heated up to 600°C and then 37.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 5% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 21.8% of NO from air.

### Example 5

300 g of cement clinker was heated up to 300°C and then 7.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 1% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 7.4% of NO from air.

### Example 6

300 g of cement clinker was heated up to 300°C and then 22.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 3% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 9% of NO from air.

### Example 7

300 g of cement clinker was heated up to 300°C and then 37.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 5% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cmx2cmx0.6cm removed 17.9% of NO from air.

### Example 8

300 g of cement clinker was heated up to 100°C and then 7.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 1% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 8.9% of NO from air.

### Example 9

300 g of cement clinker was heated up to 100°C and then 22.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 3% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 9% of NO from air.

### Example 10

300 g of cement clinker was heated up to 100°C and then 37.5 g of the by-product from the titanium white sulphate production plant taken from the drum filters before the addition of roasting additives and before calcination were added. This material contained 60% water. The by-product was mixed with clinker and dried in cold air. After 30 minutes, the modified clinker was ground in a ball mill. Cement with 5% TiO₂ content was obtained. Modified cement tiles were obtained after adding water. The activity of this material was tested during NO (II) decomposition. The initial concentration of NO (II) amounted to 1ppm. After irradiation for 30 minutes with ultraviolet light, 4 tiles made of cement with dimensions of 2cm x 2cm x 0.6cm removed 9.4% of NO from air.

## Claims

1. A method of obtaining photoactive cements containing titanium dioxide, **characterized in that,** during cement production, to cement clinker during its cooling the by-product from the installation of obtaining titanium white by the sulphate method, taken from the drum filters before adding roasting additives and before calcination, is added, in an amount of 1 to 5 mass % calculated on a dry weight basis relative to clinker mass.

2. The method according to claim 1, **characterized in that** the intermediate from the installation for obtaining titanium white by the sulphate method is added to the cement clinker at a temperature from 600 to 100°C.

## Patentansprüche

1. Methode zur Gewinnung photoaktiver Zemente, die Titandioxid enthalten, Charakteristisch dadurch, dass während der Zementherstellung Zementklinker, Während des Abkühlens in der Kühlbox wird das Halbfertigprodukt von der Gewinnung von Titanweiß mittels Sulfatverfahren, das aus Trommelfiltern entnommen wird vor der Zugabe von Röstungszusätzen und vor der Kalkzination in der Menge von 1 bis 5 % Gewicht im Verhältnis zum Zement in Bezug auf Trockensubstanz.

2. Methode gemäß Reservation 1, **gekennzeichnet dadurch, dass** das Zwischenprodukt aus dem um Titanweiß mit der Sulfatmethode zu gewinnen, wird dem Klinker zugesetzt Zement bei einer Temperatur von 600 bis 100 °C.

## Revendications

1. Méthode d'obtention de ciments photoactifs contenant du dioxyde de titane, caractéristique du fait que, lors de la production du ciment, le clinker de ciment, Pendant son refroidissement dans la glacière, le produit semi-fini provenant de la Obtenir du blanc de titane par la méthode du sulfate, prélevé à partir de filtres à tambour Avant l'ajout d'additifs pour la torréfaction et avant la calcination, dans une proportion de 1 à 5 % le poids par rapport au ciment en termes de matière sèche.

2. Méthode selon la réserve 1, **caractérisée par le fait que** le produit intermédiaire à partir de la L'obtention du blanc de titane par la méthode du sulfate est ajouté au clinker le ciment à une température de 600 à 100 °C.
